**Europäisches Patentamt**

**European Patent Office**

**Office européen des brevets**

(19)

(11) Veröffentlichungsnummer: **0 130 240**
A2

# (12) EUROPÄISCHE PATENTANMELDUNG

(21) Anmeldenummer: **83113232.9**

(51) Int. Cl.⁴: **H 04 B 3/54**

(22) Anmeldetag: **30.12.83**

(30) Priorität: **04.07.83 CH 3659/83**

(43) Veröffentlichungstag der Anmeldung: **09.01.85**
**Patentblatt 85/2**

(84) Benannte Vertragsstaaten: **AT BE CH DE FR GB IT LI LU NL SE**

(71) Anmelder: **HI-WORK SA, Hauptstrasse 34, CH-8750 Glarus (CH)**

(72) Erfinder: **Rottmann, Maximilian R., Stationsstrasse 5, CH-8623 Wetzikon (CH)**

(74) Vertreter: **Rottmann, Maximilian R., Hug Interlizenz AG Alte Zürcherstrasse 49, CH-8903 Birmensdorf/ZH (CH)**

(54) **Schaltungsanordnung zur Übertragung von analogen Niederfrequenzsignalen.**

(57) Von einer NF-Signalquelle (2) gelangt ein Signal zu einem Oszillator (4), dessen Leerlaufschwingfrequenz im Bereich von 100 kHz liegt und welche im Takt des NF-Signals frequenzmoduliert wird. Dieses modulierte Ausgangssignal wird über einen Anpassungsübertrager (8) und einen Kondensator (9) in das Haushaltlichtnetz eingespiesen. An beliebiger Stelle desselben kann das modulierte Signal über einen Anpassungsübertrager (15) einem Detektor (17) zugeführt werden, der ausgangsseitig wieder das ursprüngliche NF-Signal liefert, das anschließend verstärkt und einem Lautsprecher zugeführt wird. Somit können von einer zentralen Stelle aus sämtliche Zimmer eines Hauses, einer Wohnung od.dgl. mit Musik versorgt werden, ohne daß zusätzliche Installationen für die Signalübertragung erforderlich wären.

I

- 1 -

Schaltungsanordnung zur Übertragung von analogen

Niederfrequenzsignalen

-----------------------------------------------------

Die vorliegende Erfindung bezieht sich auf eine Schaltungsanordnung zur Übertragung von analogen Niederfrequenzsignalen über niederfrequente Leitungsnetze, insbesondere über das Haushalt-Lichtnetz, mit einem an das Leitungsnetz angeschlossenen Modulator, der mit dem zu übertragenden Signal gespiesen ist und mit einem entfernt vom Modulator an das Leitungsnetz anschliessbaren Demodulator.

Es sind sogenannte "drahtlose Gegensprechanlagen" bekannt, mit deren Hilfe ein niederfrequentes Signal, im allgemeinen eine Sprachinformation, über das Lichtnetz, z.B. von einer Steckdose zur anderen Steckdose, übertragen werden kann. Diese Anlagen benützen einen amplitudenmodulierten Träger zur Informationsübermittlung. Der Nachteil dieser Anlagen ist darin zu erblicken, dass diese auf jede im Netz vorhandene Störung reagieren, so dass empfängerseitig konstant mit einem Grundstörpegel gerechnet werden muss, egal, ob senderseitig eine Information eingespiesen worden ist oder nicht.

Es sind auch Anlagen bekannt, die mit einer Frequenzmodulation arbeiten; im allgemeinen treten aber dieselben Probleme auf wie zuvor beschrieben. Aussderm lässt die Übertragungsqualität, insbesondere in Bezug auf Frequenzumfang und Klirrverhalten, zu wünschen übrig, so dass diese Anlagen nicht zur Übertragung von Musiksignalen verwendet werden konnten, die auch nur annähernd die Mindestanforderungen der

0130240

2
- 8 -

HiFi-Qualität gemäss DIN Nr. 45500 erfüllen konnten.

Es ist die Aufgabe der vorliegenden Erfindung, eine Schaltungsanordnung der eingangs erwähnten Art vorzuschlagen, die insbesondere in
Bezug auf Übertragungsqualität und Störsicherhet bekannte Einrichtungen deutlich übertrifft und die somit als Musikverteilsystem
innerhalb eines Hauses, eines Büros, eines Verkaufsladens oder dgl.
verwendbar sein soll.

Gemäss der vorliegenden Erfindung, wird dies bei einer Schaltungsanordnung der eingangs erwähnten Art dadruch erreicht, dass der Modulator
einen Oszillator umfasst, dessen Schwingfrequenz ein Vielfaches der
auf dem Leitungsnetz herrschenden Frequenz beträgt und die proportional zur Frequenz des eingespiesenen Analogsignals veränderlich ist,
und dass der Demodulator einen phasenstarren Detektor umfasst, dessen
Leerlauf-Schwingfrequenz zumindest annähernd der Schwingfrequenz des
modulatorseitigen Oszillators entspricht und die sich bei Vorliegen
der Modulator-Schwingung selbsttätig auf diese einstellt, um am Ausgang ein dem in den Modulator eingespiesenen Analogsignals entsprechendes, niederfrequentes Ausgangssignal zu liefern.

Zweckmässigerweise wird die Oszillatorfrequenz des Modulators zwischen 50 und 250 kHz, vorzugweise aber zwischen 80 und 200 kHz gewählt. Dies stellt zum einen an die modulatorseitigen Elektronikbauteile keine alllzu hohen Anforderungen, sichert aber zum andern gegenüber dem niederfrequenten Leitungsnetz einen genügenden Frequenzabstand, um die störungsfreie Übertragung der analogen Niederfrequenzsignale sicherzustellen.

Der modulatorseitige Oszillator kann Rechteck- oder vorzugsweise
Sinusschwingungen erzeugen. Letztere sind vorteilhafter, da unerwünchte Harmonische in geringerem Masse auftreten. Eine bevorzugte
Ausfürungsform ist darin zu sehen, den Oszillator im Modulator als
sogenannten "VCO" auszubilden, d.h. als spannungsgesteuerten Osilator,
der selbsttätig auf einer Grundfrequenz schwingt, die gemäss den
eingespiesenen, zu übertragenden NF-Signalen frequenzmodulierbar ist.

Dem Oszillator im Modulator kann eine Verstärkerstufe nachgeschaltet
sein, die auf einen an das Leitungsnetz angekoppelten Übertrager
arbeitet. Damit ist es gegeben, dass einerseits eine optimale Ankoppelung des frequenzmodulierten Trägersignals an das Leitungsnetz gewährleistet ist; zum andern besteht die Möglichkeit, durch zweckentsprechende Auslegung der Verstärkungsstufe die in das Leitungsnetz einzukoppelnde Ausgangsleistung zweckentsprechend einzustellen bzw. zu
begrenzen, falls dies die Vorschriften erfordern sollten.

Der Demodulator ist zweckmässigerweise ebenfalls mittels eines Übertragers eingangsseitig an das Leitungsnetz angekoppelt, wobei eine dem
Übertrager nachgeschaltete Verstärkungs-Begrenzungs-Stufe vorgesehen
sein kann, die das empfangene Signal auf eine vorwählbare Amplitude
begrenzt.

Damit beim Fehlen einer Trägerfrequenz am Ausgang des Demodulators
kein Störsignal auftritt, kann dem phasenstarren Detektor ein Schaltglied zugeordnet sein, welches desssen Ausgang immer dann gegen Masse
kurzschliesst, wenn kein Trägersignal empfangen wird. Ein solches
Schaltglied kann am einfachsten durch einen Transistor realisiert
werden, dessen Steuereingang, d.h. dessen Basis mit der Begrenzerstufe
wirkungsverbunden ist.

Eine bevorzugte Verwendung der erfindungsgemäsen Schaltungsanordnung
ist in der Übertragung von Sprach- und Musiksignalen im
Frequenzbereich
von 20 - 20000 Hz über das Hauslichtnetz zu erblicken, d.h. innerhalb
einer Wohnung, eines Hauses, eines Büros, eines Ladengeschäftes und
dgl.; zur Übertragung von Stereosignalen können zwei Modulatoren
sowie zwei Demodulatoren vorgesehn sein, deren Oszillatorfrequenz
zumindest 20 kHz auseinanderliegt.

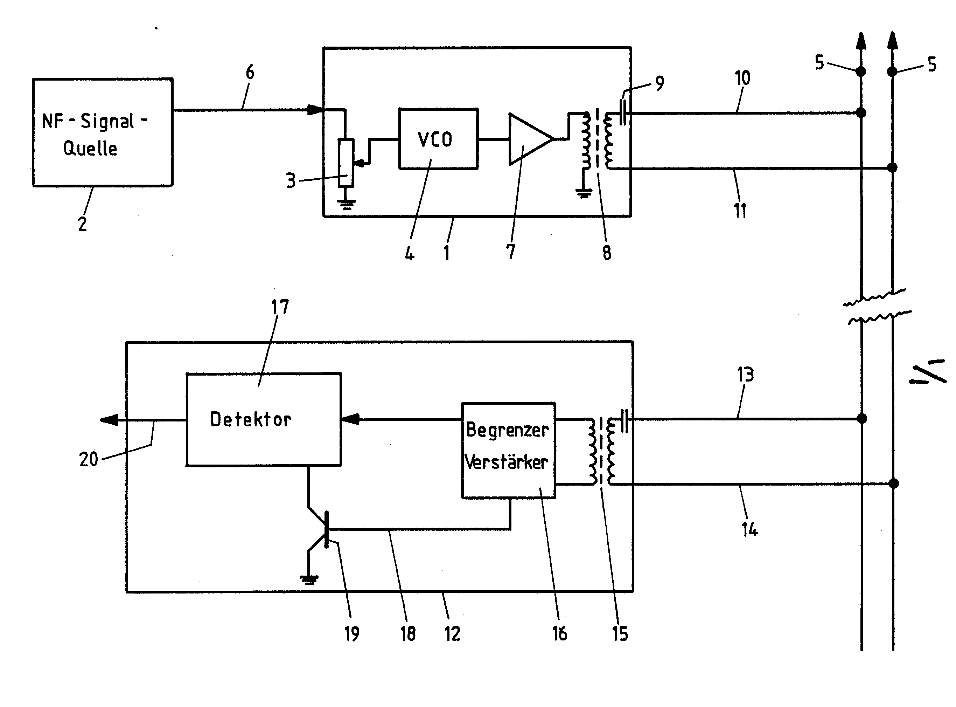

In der beiliegenden Zeichnung ist ein schematisches Blockschaltbild
einer Grundausfürung der erfindungemässen Schaltunganordnung dargestellt und wird im folgenden näher erläutert.

Ein generell mit 1 bezeichneter Modulator ist an eine NF-Signalquelle
angeschlosen, z.B. an den Tonband-Aufnahme-Ausgang eines Verstärkers
einer bestehenden Stereoanlage, die ein pegel-unabhängiges Ausgangssignal in der Grössenordnung von einigen hundert mV zu liefern vermag. Dieses NF-Signal gelangt über einen einstellbaren Eingangsabschwächer 3 zum spannungsgesteuerten Osilator 4, der bei Fehlen des
Eingangssignales vom Abschwächer 3 auf einer Grundfrequenz f schwingt.
Diese wird einerseits so niedrig gewählt, dass an die Ausführung des "VCO" (voltage controlled oscillator) keine allzu grossen Anforderungen gestellt werden müssen, dass aber andererseits ein genügender Frequenzabstand zu einem niederfrequente Spannung führenden Leitungsnetz 5 gewährleistet ist. Im allgemeinen wird es sich dabei um das Haushalt-Lichtnetz handeln, welches eine Spannung von 220 V mit einer Frequenuz von 50 Hz führt.

Die Leerlaufschwingung des VCO 4 wird im Takt des über Leitung 6 eingespiesenen NF-Signals moduliert und gelangt zu einem Verstärker 7 der einerseits das Ausgangssignal des VCO 4 auf den erforderlichen Pegel bringt, andererseits für die erforderiche Leistungsanpassung an einen Übertrager 8 dient, dessen Sekundärseite über einen Kondensator 9 an das Leitungsnetz 5 angekoppelt ist.

Auf die Dimensionierung des Abschwächers 3, des VCO 4, des Verstärkers 7, des Übertragers 8 und des Komdenstors 9 muss an dieser Stelle nicht weiter eingegangen werden, da diese einerseits von den spezifischen Eigenschaften des Leitungsnetzes 5 abhängt und da andererseits jeder mit der Materie vertraute Fachmann in der Lage sein dürfte, diese zweckentsprechend vorzunehmen.

Wie bereits erwähnt, ist die Sekundärseite des Übertragers 8 über Leitungen 10 und 11 an das Leitungsnetz 5 angekoppelt und speist in dieses einen frequenzmodulierten Träger ein. Die Frequenzmodulation des Trägers stellt dabei ein codiertes Abbild des von der Quelle 2 gelieferten NF-Signals dar.

Der empfängerseitige Modulator, gesamthaft mit 12 bezeichnet, ist über Leitungen 13 und 14 mit dem Leitungsnetz 5 verbunden. Die Primärseite eines Übertragers 15 wird mit dem modulierten Trägersignal gespiesen, und die Sekundärseite des Übertragers 15 liefert an einen Begrenzer-Verstärker 16 ein leistungsmässig angepasstes Signal.

Der Begrenzer-Verstärker 16 hat zwei Aufgaben: Zum einen vestärkt er das von der Sekundärseite des Übertragers 15 gelieferte Signal, welches unter Umständen in weiten Grenzen schwanken kann, auf einen vorbestimmten Wert und liefert ein Ausgangssignal an einen Detektor-Schaltkreis 17, der im folgenden noch näher beschrieben werden wird. Zum andern liefert der Bregrenzer-Verstärker 16 ein Steuersignal, welches über eine Leitung 18 der Basis eines Transistors 19 zugeführt wird. Der Zweck des als Schaltglied wirkenden Transistors 19 ist darin zu erblicken, dass dieser die Ausgangsleitung 20 des Detektors 17 blockiert bzw. gegen Masse kurzschliesst, falls über die Leitungen 13 und 14 kein Trägersignal eintrifft. Bei Vorhandensein eines Trägersignals hingegen gibt der Transistor 19 die Ausgangsleitung frei, so dass ein dort auftretendes, demoduliertes NF-Signal einer weiteren Verarbeitung zugeführt werden kann. Damit ist erreicht, dass empfängerseitig kein undefiniertes Rauschen bzw. keine Störsignale vorhanden ist bzw. sind, wenn der Modulator 1 nicht in Betrieb ist.

Der Detektor 17 ist vorzugsweise ein sogenannter PLL-Schaltkreis (phase locked loop), der auf einer Grundfrequenz schwingt, die zumindest annähernd gleich der vom Modulator gelieferten Schwingungsfreqeuz ist. Ein hervorstechendes Merkmal dieser PLL-Schaltkreise ist, dass sie ihre Grund-Schhwingungsfrequnz an eine an deren Eingang vorhandene, externe Frequnz anpassen. Mit anderen Woten heisst das, dass der
Demodulator 12, selbstverständlich innert gewissen Grenzen, an den
Modulator 1 anpassen wird und so auch bei Vorliegeh relativ grosser
Bauteiletoloranzen das vom Modulator 1 gelieferte Signal empfangen
und auswerten wird.

Eine beovorzugte Anwendung dieser Schaltungsanordnung ist  in der
Übertragung von Sprach- und Musiksignalen im Frenquenzbereich von 20 –
20000 Hz über das Lichtnetz zu erblicken. Wenn z.B. in einem Haushalt
eine zentrale Musikanlage vorhanden ist, kann an diese ein erfindungsgemässer Modulator angeschlosen und mit dem Haushaltnetz verbunden
werden. Dadurch ist der Benutzer in die Lage versetzt, unter Verwendung eines Demodulators bzw. mehrerer Demodulatoren an jeder beliebigen Steckdose des von das zentrlen Musikanlage gelieferte Signal zu
empfangen, egal ob es sich dabei um ein Signal von einer Schallplatte,
von  einem Rundfunkempfänger, von einem  Tonbadgerät oder dgl. handelt.

Selbstverständlich ist auch eine Erweiterung der erfindungsgemässen
Schaltungsanordnung auf Stereo-Betrieb möglich, indem zwei Modulatoren
und zwei Demodulatoren vorgesehen werden.  Es empfiehlt sich dabei,
die Oszillatorfrequenz in einem gegenseitigen Abstand von zumindest 20
kHz zu wählen, damit eine genügende Bandbreite für jeden Kanal verbleibt. In entsprechender Weise ist eine Erweitung auf Quadro-Betrieb
denkbar.

- 4 -

Mit der vorstehend beschriebenen Schaltungsanordnung kann ein von
einer zentralen Anlage geliefertes NF-Signal innerhalb einer Wohnung,
eines Hauses und dgl. verteilt werden, ohne dass irgendwelche zusätzlichen Installationen, d.h. NF-Übertragungsleitungen erforderlich
wären. Dies stellt insbesondere bei nachträglicher Ausrüstung einer
Wohnung, eines Büros, eines Verkaufsraumes und dgl. einen grossen
Vorteil dar, da solche NF-Leitungen, wenn überhaupt, nur schwer und
mit grossem Kostenaufwand zu verlegen sind. Ein weiteres Anwendungsgebiet ist im Bereich von Hotels zu erblicken, indem ohne nachträgliche
Installationen von einer zentralen Stelle aus nicht nur Musiksignale, sondern auch gesprochene Informationen, Alarmmeldungen und dgl.
übertragen werden können.

- 1 -

PATENTANSPRÜCHE

------------------------------------

1. Schaltungsanordnung zur Übertragung von analogen Niederfrequenzsignalen über niederfrequente Leitungsnetze, insbsondere über das Haushalt-Lichtnetz, mit einem an das Leitungsnetz angeschlossenen Modulator, der mit dem zu übertragenden Signal gespiesen ist und mit einem
entfernt vom Modulator an das Leitungsnetz anschliessbaren Demodulator, dadurch gekennzeichnet, dass der Modulator (1) einen Oszillator
(4) umfasst, dessen Schwingfrequenz ein Vielfaches der auf dem Leitungsnetz (5) herrschenden Frequenz beträgt und die proportional zur
Frequenz des eingespiesenen Analogsignals veränderlich ist, und dass
der Demodulator (12) einen phasenstarren Detektor (17) umfasst, dessen
Leerlauf-Schwingfrequenz zumindest annähernd der Schwingfrequenz des
modulatorseitigen Oszillators (4) entspricht und die sich bei Vorliegen der ModulatorSchwingung selbsttätig auf diese einstellt, um am
Ausgang (20) ein dem in den Modulator eingespiesenen Analogsignals
entsprechendes, niederfrequentes Ausgangssignal zu liefern.


2. Schaltungsanordnung nach Anspruch 1, dadurch gekennzeichnet, dass
die Frequenz des Oszillators (4) im Modulator (1) zwischen 50kHz und
250 kHz liegt.


3. Schaltungsanordnung nach Anspruch 1, dadurch gekennzeichnet, dass
die Frequenz des Oszillators (4) im Modulator (1) zwischen 80kHz und
200 kHz liegt.

0130240

- 2 -

4. Schaltungsanordnung nach einem der Ansprüche 1 - 3, dadurch gekennzeichnet, dass der Oszillator (4) im Modulator (1) eine zumindest annähernde Rechteckschwingung erzeugt.

5. Schaltungsanordnung nach einem der Ansprüche 1 - 3, dadurch gekennzeichnet, dass der Oszillator (4) im Modulator (1) eine zumindest annähernde Sinusschwingung erzeugt.

6. Schaltungsanordnung nach einem der vorangehenden Ansprüche, dadurch gekennzeichnet, dass der Oszillator (4) im Modulator (1) ein spannungsgesteuerter Oszillator ist.

7. Schaltungsanordnung nach einem der vorangehenden Ansprüche, dadurch gekennzeichnet, dass dem Oszillator (4) im Modulator (1) eine Verstärkerstufe (7) nachgeschaltet ist, die auf einen an das Leitungsnetz (5) angekoppelten Übertrager (8) arbeitet.

8. Schaltungsanordnung nach Anspruch 1, dadurch gekennzeichnet, dass der Demodulator (12) mittels eines Übertragers (15) an das Leitungsnetz (5) angekoppelt ist und eine dem Übertrager (15) nachgeschaltete Begrenzerstufe (16) umfasst, die das empfangene Signal auf einen vorwählbaren Amplitudenwert begrenzt.

9. Schaltungsanordnung nach Anspruch 8, dadurch gekennzeichnet, dass dem phasenstarren Detektor (17) ein Schaltglied (19) zugeordnet ist, welches den NF-Ausgang des Detektors (17) gegen Masse kurzschliesst, wenn keine vom Modulator (1) gelieferte Schwingung empfangen wird.

- 3 -

10. Schaltungsanordnung nach Anspruch 9, dadurch gekennzeichnet, dass das Schaltglied ein Transistor (19) ist, dessen Basis von der Begrenzerstufe (16) gesteuert ist.

11. Verwendung der Schaltungsanordnung nach einem der vorangehenden Ansprüche zur Übertragung von Sprach- und Musiksignalen im Frequenzbereich von 20 - 20'000 Hz über das Haushaltlichtnetz.

12. Verwendung der Schaltungsanordnung nach Anspruch 11, dadurch gekennzeichnet, dass zur Übertragung von Stereo-Signalen zwei Modulatoren sowie zwei Demodulatoren vorgesehen sind, deren Oszillatorfrequenz zumindest 20 kHz auseinanderliegt.

0130240